# FASCICULE DE BREVET EUROPEEN

(11) **EP 3 694 319 B1**
(45) Date de publication et mention de la délivrance du brevet: **05.06.2024**
(21) Numéro de dépôt: 18825756.2
(22) Date de dépôt: 27.11.2018
(51) Int. Cl.: A01M 7/00

(54) **PANNEAU DE RÉCUPÉRATION**
SAMMELPANEEL
COLLECTION PANEL

(30) Priorité: 27.11.2017 FR 1761227
(43) Date de publication de la demande: 19.08.2020
(73) Titulaire: Exel Industries, 75009 Paris (FR)
(72) Inventeur: GODIA, Josep, 75009 Paris (FR)
(74) Mandataire: Argyma
(86) Numéro de dépôt international: PCT/FR2018/053005
(87) Numéro de publication internationale: WO 2019/102169

(56) Documents cités:
- EP-A1- 0 574 740
- DE-U1- 8 906 405
- FR-A1- 3 001 159
- US-B1- 6 302 332

## Description

La présente invention se rapporte à un panneau récupérateur pour pulvérisateur agricole, à un dispositif de support pour un tel panneau, et à un pulvérisateur équipé de tels panneaux portés par de tels dispositifs.

Comme cela est connu en soi dans le domaine de la pulvérisation agricole, un problème récurrent réside dans la récupération de la partie du liquide phytosanitaire qui n'est pas déposé sur les végétaux à traiter.

On estime en effet typiquement que lors d'une opération de pulvérisation, seulement 30 % de liquide phytosanitaire reste fixé sur le feuillage des végétaux à traiter.

Le reste du liquide phytosanitaire est soit diffusé dans l'air, soit répandu sur le sol, par gravité.

Dans le contexte actuel où l'on cherche à limiter l'impact sur l'environnement des opérations de pulvérisation, ainsi qu'à économiser de manière significative les quantités de liquide phytosanitaire pulvérisées, il est essentiel de mettre au point des moyens permettant de limiter les déperditions de ce liquide.

C'est ainsi que l'on a mis en place, dans l'art antérieur, notamment des panneaux de récupération de liquide phytosanitaire, formant des sortes de boucliers - nommés aussi écrans - autour des buses de pulvérisation, permettant de récupérer une partie du liquide phytosanitaire qui n'est pas fixé sur les végétaux du feuillage à traiter.

Dans ces panneaux de récupération de la technique antérieure, on trouve des réseaux complexes de tuyaux permettant d'alimenter les différentes buses de pulvérisation : ces panneaux sont ainsi lourds et complexes à nettoyer.

De plus, ces panneaux sont conçus pour être positionnés toujours parallèles aux rangs de végétaux à traiter, ce qui les rend peu maniables et adaptables à différentes configurations de fonctionnement (roulage sur route, demi-tour en bout de rang, etc.).

Les documents US 6 302 332 B1, FR 3 001 159 A1, EP 0 574 740 A1, et DE 89 06 405 U1, décrivent des panneaux récupérateurs pour pulvérisateurs agricoles selon l'état de la technique.

La présente invention vise notamment à améliorer la conception, la maniabilité et l'efficacité de tels panneaux de récupération.

On atteint ce but de l'invention avec un panneau récupérateur tel que décrit par la revendication indépendante 1.

Cette conception en caisson creux à orifices du panneau récupérateur permet de s'affranchir de toute la tuyauterie des dispositifs de la technique antérieure, nécessaire pour acheminer l'air vers les buses de pulvérisation : on obtient de la sorte une conception simplifiée du panneau récupérateur, permettant à la fois la pulvérisation du produit phytosanitaire et la récupération du produit phytosanitaire pulvérisé et non fixé sur les végétaux du feuillage à traiter, un tel panneau nécessitant peu de pièces, étant facile à nettoyer (absence de recoins et d'endroits peu accessibles à l'intérieur du caisson), et présentant un poids réduit par rapport aux solutions connues de l'art antérieur.

Suivant d'autres caractéristiques optionnelles du panneau récupérateur selon l'invention :
- ledit panneau comprend des nervures sur sa face de travail : la présence des nervures sur la face de travail de chaque panneau récupérateur permet d'éviter le rebond sur ce panneau des gouttelettes de liquide phytosanitaire renvoyées par le feuillage des végétaux ; en évitant ce rebond, on limite la quantité de liquide phytosanitaire dispersé dans l'environnement ; ces nervures permettent de plus de renforcer la tenue structurelle (résistance aux déformations) du panneau récupérateur,
- lesdites nervures présentent une section sensiblement triangulaire, et s'étendent selon une direction verticale en position de travail,
- ce panneau récupérateur comprend un bac de récupération de liquide phytosanitaire en partie inférieure en position de travail, apte à être connecté à un tuyau de récupération de ce liquide,
- ce panneau récupérateur est muni sur sa face opposée à sa face de travail d'une rainure apte à recevoir un tuyau d'arrivée de liquide phytosanitaire,
- lesdites ouvertures ou pré-ouvertures aptes à recevoir des ensembles de pulvérisation du type à air pulsé sont disposées symétriquement de part et d'autre desdites nervures,
- ce panneau récupérateur comprend des orifices ou pré-orifices de sortie d'air disposés symétriquement d'un seul côté ou de part et d'autre desdites nervures, et/ou au-dessus et/ou en-dessous desdites nervures en position de travail : ces ouvertures ou pré-ouvertures permettent de former des rideaux d'air périphériques permettant d'encadrer la pulvérisation de liquide phytosanitaire, notamment en présence de vent ; cela permet notamment d'envisager une pulvérisation avec une plus grande vitesse d'avancement de l'engin agricole, typiquement supérieure d'environ 20% par rapport à une vitesse d'avancement traditionnelle ;
- ce panneau récupérateur est formé en polyéthylène rigide ou flexible.

La présente invention se rapporte également à un pulvérisateur selon la revendication 8.

La présente invention se rapporte également à un pulvérisateur équipé de panneaux récupérateurs conformes à ce qui précède, portés par des dispositifs de support respectifs conformes à ce qui précède, dans lequel lesdits panneaux récupérateurs sont mobiles entre une position de travail dans laquelle ces panneaux sont disposés parallèlement les uns aux autres à l'arrière dudit pulvérisateur, et une position de rangement dans laquelle certains au moins de ces panneaux sont rangés sur les côtés du pulvérisateur, parallèlement à leur position de travail, ou bien sur le dessus dudit pulvérisateur.

La présente invention se rapporte également à un pulvérisateur équipé de panneaux récupérateurs conformes à ce qui précède, portés par des dispositifs de support respectifs conformes à ce qui précède, dans lequel en position de travail, lesdits panneaux sont disposés de manière à former deux à deux des angles ouverts vers l'avant dudit pulvérisateur.

D'autres caractéristiques et avantages de la présente invention apparaîtront à la lumière de la description qui va suivre, et à l'examen des figures ci-annexées, dans lesquelles :
- la figure 1 est une vue en perspective d'un pulvérisateur agricole supportant des panneaux récupérateurs selon l'invention, chevauchant un rang de végétaux à traiter,
- la figure 2 est une vue en perspective de l'un des panneaux récupérateurs du pulvérisateur de la figure 1, sur lequel on a représenté de manière symbolique différents jets d'air opérationnels lorsque le pulvérisateur est en situation de travail,
- les figures 3a, 3b, 3c montrent ce panneau récupérateur orienté de différentes manières par rapport à son dispositif de support,
- la figure 4 est une vue en perspective éclatée de la partie supérieure de ce panneau récupérateur et de son dispositif de support associé,
- la figure 5 est une vue en perspective de dessus du pulvérisateur selon l'invention, dans lequel on a représenté l'un des panneaux récupérateurs en position escamotée, permettant notamment la circulation de ce pulvérisateur sur route, ainsi qu'un virage plus facile en bout de rang, permettant d'éviter d'accrocher les végétaux,
- les figures 6 et 7 sont des vues schématiques de modes de rangement possibles des panneaux récupérateurs par rapport à la partie principale du pulvérisateur, et
- la figure 8 est une vue en perspective d'une position de travail possible des panneaux récupérateurs d'un pulvérisateur selon l'invention.

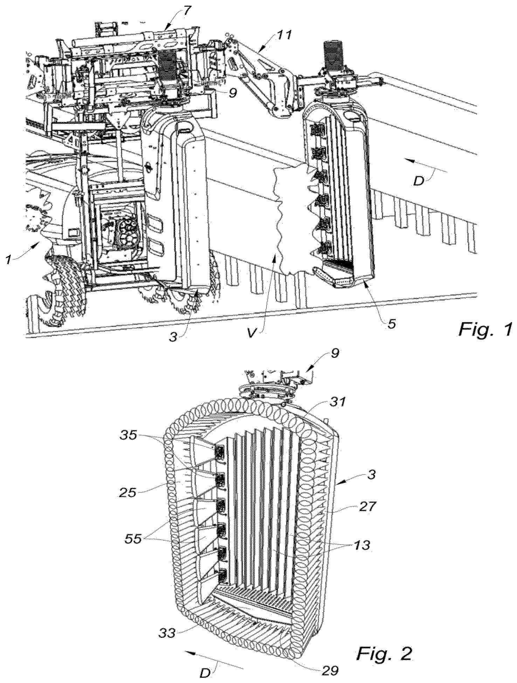

On se reporte à présent à la figure 1, sur laquelle on a représenté un engin pulvérisateur 1 (en l'espèce, un pulvérisateur tracté), supportant des panneaux récupérateurs 3, 5 selon l'invention par l'intermédiaire d'un mécanisme de suspension articulé 7, comprenant notamment des dispositifs de support 9, 11.

Comme cela est visible sur la figure 1, lorsque l'engin de pulvérisation 1 circule selon la direction et le sens d'avancement D, les panneaux récupérateurs 3, 5 disposés de part et d'autre des végétaux à traiter V, permettent de pulvériser sur le feuillage de ces végétaux un liquide phytosanitaire permettant de réaliser un traitement approprié de ces végétaux.

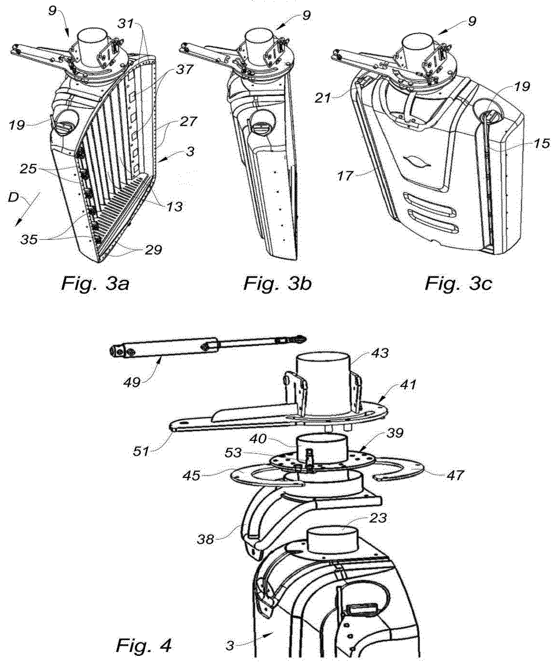

En se reportant plus particulièrement aux figures 2 et 3a à 3c, on peut voir qu'un panneau récupérateur 3 selon l'invention se présente sous la forme d'un caisson monobloc, formé de préférence dans un matériau thermoplastique tel que le polyéthylène rigide ou flexible. Ce caisson délimite un volume creux à l'intérieur duquel peut circuler l'air alimentant le ou les ensemble(s) de pulvérisation.

Autrement dit, ce caisson présente une forme creuse telle une barque délimitée par une face arrière munie d'une paroi sensiblement fermée et/ou étanche et une face avant d'où est effectuée à la fois la pulvérisation du produit phytosanitaire et la récupération du produit phytosanitaire pulvérisé et non fixé sur les végétaux du feuillage à traiter. Une telle forme, telle une « barque » pourrait flotter sur de l'eau grâce une telle forme et une telle face arrière étanche.

Sur sa face de travail, c'est-à-dire sur la face destinée à venir en vis-à-vis des végétaux à traiter, le caisson 3 comporte une pluralité de nervures 13 s'étendant sensiblement selon une direction verticale, et pratiquement sur toute la hauteur du panneau récupérateur, la verticale s'entendant par rapport à la position de travail de ce panneau, tel que représenté sur la figure 1.

De préférence, ces nervures 13 peuvent présenter chacune une section sensiblement triangulaire.

Sur sa face opposée à sa face de travail, particulièrement visible sur la figure 3c, ce panneau récupérateur comporte des rainures 15, 17, permettant d'accueillir respectivement un tuyau 19 d'arrivée de liquide phytosanitaire, et un tuyau 21 de récupération d'une partie de ce liquide.

Comme représenté à la figure 4, dans sa partie supérieure, le caisson formant le panneau récupérateur 3 comporte une ouverture 23 d'arrivée d'air.

Comme visible notamment sur les figures 2 et 3a, le panneau récupérateur 3 comporte, sur ses bords latéraux, une pluralité d'orifices de sortie d'air latéraux 25, 27.

Comme visible également sur ces deux figures, ce panneau récupérateur 3 comporte aussi des sorties d'air inférieures 29 est supérieures 31.

Comme visible sur la figure 2 le panneau récupérateur 3 comporte également, dans sa partie inférieure, un bac de récupération 33 de liquide phytosanitaire, connecté au tuyau de récupération de liquide phytosanitaire 21 de la figure 3c.

Comme visible sur les figures 2 et 3a, le panneau récupérateur 3 comporte, sur sa face de travail, et vers l'avant du panneau récupérateur par rapport au sens de circulation D en situation de travail, une pluralité d'ensembles de pulvérisation à air pulsé 35.

Ces ensembles 35, qui ne seront pas détaillés ici, comportent chacun un diffuseur d'air communiquant avec l'espace creux du caisson formant le récupérateur 3, et une buse de pulvérisation connectée au tuyau d'arrivée de liquide phytosanitaire 15.

Ces ensembles de pulvérisation 35 sont positionnés dans des ouvertures formées dans le caisson définissant le récupérateur 3. Des pré-ouvertures 37 sont disposées symétriquement sur ce caisson, comme visible à la figure 3a, afin de permettre de positionner respectivement les diffuseurs d'air et les buses de pulvérisation les ensembles de pulvérisation 35 de manière symétrique sur la face de travail du récupérateur 3, afin de permettre une réversibilité de montage droite/gauche de ce récupérateur.

Afin de réaliser la pulvérisation, l'air circulant dans le caisson apporte un air propulseur jusqu'à l'ensemble de pulvérisation 35. L'air propulseur entre par une entrée de l'ensemble de pulvérisation, le traverse de part en part et ressort par une ouverture en sortie, sous forme d'un jet d'air dirigé vers les végétaux à traiter. L'ensemble de pulvérisation assure une fonction de mise en forme du jet d'air et sa distribution vers les végétaux à traiter. Le produit phytosanitaire est dispersé à l'ouverture de sortie de la buse afin d'être porté ou soufflé par le jet d'air dans le feuillage des végétaux à traiter.

L'ensemble de pulvérisation est un ensemble permettant la diffusion d'air et la pulvérisation du produit phytosanitaire. Un tel ensemble est aussi appelé ensemble buse ou bloc buse et peut être considéré comme un ensemble configuré pour assurer un mélange d'un produit phytosanitaire avec l'air propulseur pour former un aérosol, c'est-à-dire pour pulvériser et diffuser l'aérosol.

De préférence, cet de pulvérisation 35 est amovible d'un seul tenant de la paroi qui la porte pour en faciliter la maintenance.

En se reportant à présent plus particulièrement à la figure 4, on peut voir que le dispositif de support du panneau récupérateur 3 selon l'invention comporte d'une part un cadre de fixation 38 fixé sur la partie supérieure du panneau récupérateur 3, lui-même relié de manière fixe à une tête mâle 39 elle-même montée pivotante par rapport à une tête femelle 41.

La tête mâle 39 comporte un conduit mâle 40 communiquant avec l'orifice d'arrivée 23 du panneau récupérateur 3, et emboîté à l'intérieur d'un conduit femelle 43 solidaire de la tête femelle 41.

Deux demi-disques 45, 47 fixés à la tête femelle 41 autorisent uniquement un mouvement de rotation de la tête mâle 39 par rapport à la tête femelle 43.

Un vérin 49 interposé entre une extension 51 de la tête femelle 41 et un pion d'actionnement 53 solidaire de la tête mâle 39, permet d'actionner en rotation cette tête mâle 39 par rapport à la tête femelle 43, et par là-même d'assurer un mouvement de rotation du panneau récupérateur 3 par rapport à un axe sensiblement vertical.

On a représenté sur les figures 3a à 3c différentes orientations possibles du panneau récupérateur 3 par rapport à la tête femelle 41 : sur la figure 3a, l'extension 51 de la tête femelle 41 est orientée de manière sensiblement perpendiculaire au plan général du panneau récupérateur 3 : cette position correspond à la position de travail du panneau récupérateur, représenté à la figure 1.

Sur la figure 3b, le panneau récupérateur 3 est en train de pivoter sous l'effet de l'actionnement du vérin 49 de la position de travail vers la position de rangement (cette dernière étant visible sur la figure 3c), dans laquelle l'extension 51 de la tête femelle 41 se trouve sensiblement dans le plan général du panneau récupérateur 3.

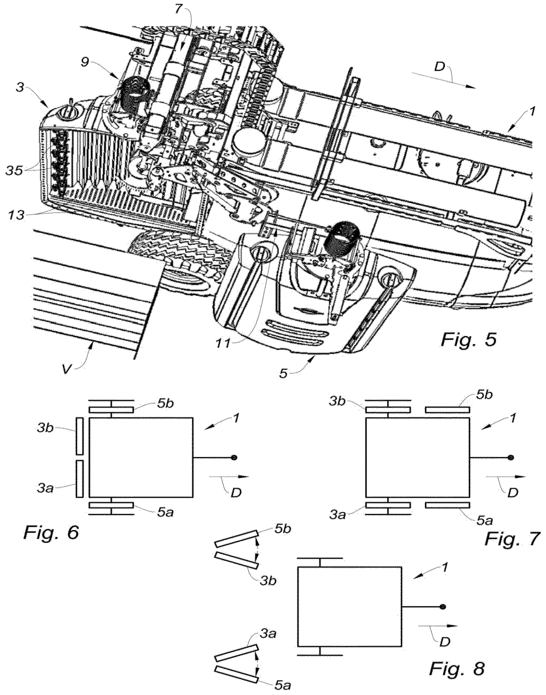

Cette position de rangement est plus particulièrement visible sur la figure 5, sur laquelle on peut voir que le panneau récupérateur 5, relié à son dispositif de support 9, se trouve rangé sensiblement le long du corps principal du pulvérisateur 1.

Pour ce pulvérisateur particulier, en position de rangement, l'autre panneau récupérateur associé 3 reste positionné à l'arrière du corps principal du pulvérisateur.

Bien entendu, d'autres cinématiques de rangement des panneaux récupérateurs peuvent être envisagées, comme cela est représenté sur les figures 6 et 7, de manière schématique.

Sur la figure 6, les panneaux récupérateurs 5a et 5b se trouvent rangés le long du corps du pulvérisateur 1, et deux autres panneaux récupérateurs 3a et 3b se trouvent rangés le long de l'arrière de ce corps.

Sur la figure 7, tous les panneaux récupérateurs 3a, 5a et 3b, 5b se trouvent rangés sur les côtés du corps du pulvérisateur 1.

On pourrait aussi envisager que certains au moins des panneaux récupérateurs se rangent sur la partie supérieure du corps du pulvérisateur.

Le mode de fonctionnement et les avantages de la présente invention résultent directement de la description qui précède.

En position de travail, les panneaux récupérateurs 3, 5 chevauchent par paires la rangée de végétaux à traiter V, comme cela est représenté à la figure 1.

Du liquide phytosanitaire sous pression arrive de la cuve du pulvérisateur 1 par les tuyaux d'arrivée de liquide 19 (figure 3c) disposés sur chaque panneau récupérateur 3.

Ce liquide phytosanitaire est pulvérisé par les ensembles de buses 35 disposés sur la face de travail du panneau récupérateur 3 (figure 2).

Par ailleurs, de l'air sous pression engendré par une centrale de génération d'air comprimé, arrive par l'ouverture supérieure 23 (figure 4) du panneau récupérateur, après avoir traversé les conduits femelle 43 et mâle 40 du dispositif de support du panneau récupérateur.

Cet air sous pression va remplir le volume intérieur du caisson formant le panneau récupérateur 3 en créant une chambre de pression, permettant d'alimenter les diffuseurs d'air des ensembles de pulvérisation 35.

Cela permet d'engendrer ainsi des faisceaux d'air pulsé 55 (voir figure 2), permettant d'améliorer la projection du liquide phytosanitaire sur les feuillages des végétaux V.

Par ailleurs, la chambre de pression dans le caisson formant le volume du récupérateur 3, va aussi permettre d'expulser l'air par les orifices latéraux 25, 27, inférieurs 29 et supérieurs 31 du panneau récupérateur.

Ces orifices latéraux, inférieurs et supérieurs permettent de créer un rideau d'air encadrant le nuage de pulvérisation engendré par les ensembles de buses 35.

Plus particulièrement, les rideaux d'air inférieur, arrière et supérieur engendrés respectivement par les orifices 29, 27 et 31 visibles à la figure 2, permettent de contenir un grande partie du liquide phytosanitaire qui n'arrive pas ou ne reste pas sur les feuilles des végétaux à traiter.

Le rideau d'air engendré par les orifices 25 situés sur le bord avant (par rapport à la direction et au sens d'avancement D en situation de travail) du panneau récupérateur 3 permettent d'agiter le feuillage des végétaux à traiter juste en amont des ensembles de pulvérisation 35, et ainsi d'exposer au mieux ses feuilles au jet de liquide phytosanitaire à pulvériser.

Les nervures 13 (figure 2) disposées sur la face de travail du panneau récupérateur 3 permettent d'éviter le rebond des gouttelettes de liquide phytosanitaire renvoyé par les feuilles des végétaux ; après avoir frappé ces nervures, les gouttelettes dégoulinent jusqu'à l'intérieur du bac de récupération 33, qui renvoie vers la cuve de liquide phytosanitaire du pulvérisateur le liquide ainsi récupéré, via le tuyau de retour 21 (figure 3c).

En actionnant chacun des vérins 49 (figure 4), on peut modifier l'orientation de chaque panneau récupérateur 3 par rapport au corps du pulvérisateur 1, comme cela est visible sur les figures 3a, 3b et 3c.

En particulier, on peut faire passer ces panneaux récupérateurs de la position de travail représentée à la figure 1, à la position de rangement représentée à la figure 5 ou aux figures 6 et 7, comme déjà expliqué plus haut.

On peut aussi avantageusement, en situation de travail, modifier l'orientation respective des panneaux récupérateurs 3a, 5a et 3b, 5b, comme représenté à la figure 8, c'est-à-dire par exemple en formant un angle ouvert vers l'avant du pulvérisateur, de manière à mieux accueillir et à enserrer les végétaux à traiter entre chaque paire de panneaux récupérateurs.

Chaque panneau récupérateur est conçu de manière à pouvoir être utilisé indifféremment en panneau récupérateur gauche ou droite.

À cet effet, les orifices destinés recevoir les ensembles de pulvérisation 35 sont pré-percés de chaque côté de la face de travail du panneau récupérateur, puis percés au moment de la mise en place de ces ensembles de pulvérisation en fonction de la destination gauche ou droite de chaque panneau.

Bien entendu, la présente invention n'est nullement limitée au mode de réalisation décrit est représenté, fourni à titre de simple exemple; l'étendue de protection étant conférée par la revendication indépendante 1.

## Revendications

1. Panneau récupérateur (3, 5 ; 3a, 3b, 5a, 5b) pour pulvérisateur agricole (1), formant
un caisson creux comprenant une ouverture d'arrivée d'air (23), et comprenant, sur une face de travail, des ouvertures ou pré-ouvertures (37) aptes à recevoir des ensembles de pulvérisation du type à air pulsé (35),
**caractérisé en ce que** le caisson est monobloc.

2. Panneau récupérateur (3, 5 ; 3a, 3b, 5a, 5b) selon la revendication 1, muni de nervures (13) sur sa face de travail.

3. Panneau récupérateur (3, 5 ; 3a, 3b, 5a, 5b) selon la revendication 2, dans lequel lesdites nervures (13) présentent une section sensiblement triangulaire, et s'étendent selon une direction verticale en position de travail.

4. Panneau récupérateur (3, 5 ; 3a, 3b, 5a, 5b) selon l'une quelconque des revendications précédentes, comprenant un bac (33) de récupération de liquide phytosanitaire en partie inférieure en position de travail, apte à être connecté à un tuyau de récupération de ce liquide (21).

5. Panneau récupérateur (3, 5 ; 3a, 3b, 5a, 5b) selon l'une quelconque des revendications précédentes, muni sur sa face opposée à sa face de travail d'une rainure (15) apte à recevoir un tuyau d'arrivée de liquide phytosanitaire (19).

6. Panneau récupérateur (3, 5 ; 3a, 3b, 5a, 5b) selon la revendication 2 et l'une quelconque des revendications 3 à 5, dans lequel lesdites ouvertures ou pré-ouvertures (37) aptes à recevoir des ensembles de pulvérisation (35) du type à air pulsé, sont disposées symétriquement de part et d'autre desdites nervures (13).

7. Panneau récupérateur (3, 5 ; 3a, 3b, 5a, 5b) selon l'une quelconque des revendications précédentes, formé en polyéthylène rigide ou flexible.

8. Pulvérisateur (1) équipé de panneaux récupérateurs (3a, 3b, 5a, 5b) selon l'une quelconque des revendications 1 à 7, portés par des dispositifs de support respectifs (9, 11), les dispositifs de support (9, 11) comprenant un cadre de fixation (38) à la partie supérieure dudit panneau en position de travail, une tête mâle (39) montée fixe sur ce cadre (38) munie d'un conduit mâle (40) de circulation d'air, une tête femelle (41) recevant de manière pivotante ladite tête mâle (39) et munie d'un conduit femelle (43) de circulation d'air dans lequel s'étend ledit conduit mâle (40), un vérin d'actionnement (49) interposé entre lesdites têtes femelle (41) et mâle (39), et des moyens de liaison de ladite tête femelle (41) à des bras de suspension articulés sur ledit pulvérisateur (1).

## Patentansprüche

1. Sammelpaneel (3, 5; 3a, 3b, 5a, 5b) für Agrar-Feldspritze (1), das einen hohlen Kasten bildet, der eine Lufteinlassöffnung (23) umfasst und auf einer Arbeitsfläche Öffnungen oder Vor-Öffnungen (37) umfasst, die imstande sind, Sprühanordnungen vom Typ mit gepulster Luft (35) aufzunehmen, **dadurch gekennzeichnet, dass** der Kasten einteilig ist.

2. Sammelpaneel (3, 5; 3a, 3b, 5a, 5b) nach Anspruch 1, das mit Rippen (13) auf seiner Arbeitsfläche versehen ist.

3. Sammelpaneel (3, 5; 3a, 3b, 5a, 5b) nach Anspruch 2, wobei die Rippen (13) einen etwa dreieckigen Querschnitt aufweisen und sich in Arbeitsposition gemäß einer vertikalen Richtung erstrecken.

4. Sammelpaneel (3, 5; 3a, 3b, 5a, 5b) nach einem der vorangehenden Ansprüche, umfassend in Arbeitsposition einen Auffangbehälter (33) für Pflanzenschutzflüssigkeit im unteren Teil, der imstande ist, mit einem Auffangrohr für diese Flüssigkeit (21) verbunden zu sein.

5. Sammelpaneel (3, 5; 3a, 3b, 5a, 5b) nach einem der vorangehenden Ansprüche, das auf seiner Fläche, die seiner Arbeitsfläche gegenüberliegt, mit einer Nut (15) versehen ist, die imstande ist, ein Rohr zur Einleitung von Pflanzenschutzflüssigkeit (19) aufzunehmen.

6. Sammelpaneel (3, 5; 3a, 3b, 5a, 5b) nach Anspruch 2 und einem der Ansprüche 3 bis 5, wobei die Öffnungen oder Vor-Öffnungen (37, 38), die imstande sind, Sprühanordnungen (35) vom Typ mit gepulster Luft aufzunehmen, symmetrisch beiderseits der Rippen (13) angeordnet sind.

7. Sammelpaneel (3, 5; 3a, 3b, 5a, 5b) nach einem der vorangehenden Ansprüche, das aus starrem oder flexiblem Polyethylen gebildet ist.

8. Feldspritze (1), die mit Sammelpaneelen (3a, 3b, 5a, 5b) nach einem der Ansprüche 1 bis 7 ausgestattet ist, die von jeweiligen Haltevorrichtungen (9, 11) getragen werden, wobei die Haltevorrichtungen (9, 11) in Arbeitsposition einen Befestigungsrahmen (38) im oberen Teil des Paneels, einen Steckkopf (39), der fest auf diesem Rahmen (38) angebracht ist, ausgestattet mit einer Luftzirkulations-Steckleitung (40), einen Aufnahmekopf (41), der den Steckkopf (39) schwenkend aufnimmt und mit einer Luftzirkulations-Aufnahmeleitung (43) ausgestattet ist, in die sich die Steckleitung (40) erstreckt, einen Betätigungszylinder (49), der zwischen dem Aufnahmekopf (41) und dem Steckkopf (39) angeordnet ist und Verbindungsmittel des Aufnahmekopfs (41) mit Aufhängearmen, die an der Feldspritze (1) angelenkt sind, umfassen.

## Claims

1. Collection panel (3, 5; 3a, 3b, 5a, 5b) for an agricultural sprayer (1), forming a hollow box comprising an air intake opening (23), and comprising, on a working face, openings or pre-openings (37) suitable for receiving pulsed air type spraying assemblies (35), caracterized in that the box is monobloc.

2. Collection panel (3, 5; 3a, 3b, 5a, 5b) according to claim 1, equipped with ribs (13) on the working face thereof.

3. Collection panel (3, 5; 3a, 3b, 5a, 5b) according to claim 2, wherein said ribs (13) have a substantially triangular cross-section, and extend along a vertical direction in the working position.

4. Collection panel (3, 5; 3a, 3b, 5a, 5b) according to any one of the preceding claims, comprising a phytosanitary liquid collection tank (33) at the bottom in the working position, suitable for being connected to a pipe for collecting this liquid (21).

5. Collection panel (3, 5; 3a, 3b, 5a, 5b) according to any one of the preceding claims, equipped on the face thereof opposite the working face thereof with a groove (15) suitable for receiving a phytosanitary intake pipe (19).

6. Collection panel (3, 5; 3a, 3b, 5a, 5b) according to claim 2 and any one of claims 3 to 5, wherein said openings or pre-openings (37) suitable for receiving pulsed air type spraying assemblies (35), are disposed symmetrically on either side of said ribs (13).

7. Collection panel (3, 5; 3a, 3b, 5a, 5b) according to any one of the preceding claims, formed of rigid or flexible polyethylene.

8. Sprayer (1) equipped with collection panels (3a, 3b, 5a, 5b) according to any one of claims 1 to 7, borne by respective supporting devices (9, 11), the supporting devices (9, 11) comprising a fastening frame (38) at the top of said panel in the working position, a male head (39) fixedly mounted on this frame (38) equipped with a male air flow duct (40), a female head (41) receiving said male head (39) in a pivoting manner and equipped with a female air flow duct (43) in which said male duct (40) extends, a cylinder actuator (49) interposed between said female (41) and male (39) heads, and means for connecting said female head (41) to hinged suspension arms on said spreayer (1).
